# FASCICULE DE BREVET EUROPEEN

(11) **EP 2 989 023 B1**
(45) Date de publication et mention de la délivrance du brevet: **16.10.2019**
(21) Numéro de dépôt: 14788549.5
(22) Date de dépôt: 25.04.2014
(51) Int. Cl.: B65D 71/04, B65B 27/08, B65B 35/50, B65B 61/22, B65B 11/00, B65D 61/00

(54) **DISPOSITIF AVEC SUPPORTS RÉUTILISABLES POUR L'EMBALLAGE D'ARTICLES PLATS ET EMBALLAGE CORRESPONDANT**
VORRICHTUNG MIT WIEDERVERWENDBAREN BEHÄLTERN ZUM VERPACKEN VON FLACHEN GEGENSTÄNDEN UND ENTSPRECHENDE VERPACKUNG
DEVICE COMPRISING REUSABLE HOLDERS FOR THE PACKAGING OF FLAT ITEMS, AND CORRESPONDING PACKAGING

(30) Priorité: 26.04.2013 CA 2814275
(43) Date de publication de la demande: 02.03.2016
(73) Titulaire: CONCEPTION IMPACK DTCI INC., Saint-Jacques QC J0K 2R0 (CA)
(72) Inventeur: THÉRIAULT, Dominic, Saint-Jacques, Québec J0K 2R0 (CA); TREMBLAY, Mathieu, Laval, Québec H7H 3B2 (CA); BEAUSÉJOUR, Michel, Joliette, Québec J6E 0G9 (CA)
(74) Mandataire: Nuss, Laurent
(86) Numéro de dépôt international: PCT/CA2014/050398
(87) Numéro de publication internationale: WO 2014/172793

(56) Documents cités:
- EP-A1- 1 352 845
- CA-A1- 2 473 878
- DE-B3- 10 197 125
- JP-A- H05 193 672
- JP-A- 2008 179 374
- US-A- 1 929 161
- US-A- 5 439 114
- US-A1- 2006 081 485
- US-A1- 2007 039 848
- US-A1- 2007 140 825
- US-A1- 2010 213 088
- US-A1- 2011 017 616
- US-A1- 2013 199 954

## Description

### DOMAINE TECHNIQUE

Le domaine technique concerne le conditionnement d'articles plats, par exemple des boîtes pliantes dont la compression dans le sens de leur épaisseur doit être minimisée ou autrement contrôlée lorsqu'elles sont emballées pour leur transport et leur entreposage avant leur utilisation. Le conditionnement est réalisé à l'aide d'un dispositif qui inclut une paire de supports latéraux, lesquels sont réutilisables et économiques, permettant de créer un emballage autoportant qui est à la fois simple, pratique et efficace. Ces supports latéraux peuvent notamment remplacer les suremballages sous forme de caisses protectrices faites de carton ondulé, lesquelles sont souvent utilisées dans l'industrie des boîtes pliantes.

### ÉTAT DE LA TECHNIQUE

L'industrie des boîtes pliantes est depuis longtemps à la recherche d'une solution alternative, plus économique, écologique et pratique, aux suremballages sous forme de caisses de carton ondulé pour le conditionnement de plusieurs articles plats unitaires qui sont juxtaposés afin de former une cartouche. Ces caisses de carton ondulé ont un nombre de réutilisations très limité, mais leur faible coût et leur grande disponibilité en font la solution la plus répandue. Ces caisses permettent de recevoir les articles plats et de les protéger jusqu'à leur utilisation, notamment pour leur transport et leur entreposage avant leur utilisation.

D'autres techniques pour le conditionnement d'articles plats existent, par exemple l'emballage avec bandes sous tension dans laquelle un certain nombre d'articles plats sont juxtaposés, dans le sens de leur épaisseur, puis comprimés fermement les uns contre les autres à l'aide d'une ou de plusieurs bandes de serrage. La compression des articles plats forme un bloc relativement rigide, ce qui permet d'en faciliter la manutention et de réduire l'encombrement. Cette technique peut cependant endommager les articles plats situés aux extrémités et sur lesquels les bandes sont recourbées pour suivre le contour du bloc d'articles plats. De plus, la tension relativement élevée qu'il est nécessaire de maintenir pour solidariser efficacement les articles plats en bloc peut diminuer significativement la mémoire de forme des articles plats et nuire à leur utilisation subséquente. La diminution de la mémoire de forme des articles plats comprimés fermement avec des bandes sous tension peut s'accentuer avec le temps et elle peut même devenir nulle. La mémoire de forme est la tendance naturelle des articles plats à rester légèrement entrouverts lorsqu'ils sont neufs. Dans le cas de boîtes pliantes, cette élasticité du corps des boîtes, dans leur configuration plane, peut être très utile, voire nécessaire, lorsque ces boîtes seront utilisées plus tard dans des équipements d'emballage, notamment des équipements automatisés, servant à manipuler chaque boîte avant l'usage pour lequel elle a été conçue. Il est donc souhaitable de préserver cette mémoire de forme entre l'étape de fabrication des articles plats et leur utilisation. Pour ces raisons, le conditionnement avec bandes sous tension ne s'applique généralement qu'à quelques types d'articles plats.

Il faut aussi mentionner que la mise en bloc d'articles plats par bandes sous tension ne les protège pas aussi bien que lorsqu'ils sont placés dans des caisses de carton ondulé. De plus, la superposition de ces blocs d'articles plats fait porter tout le poids des blocs du dessus directement par les blocs du dessous, ce qui peut endommager les articles plats dans les blocs du dessous.

Certaines améliorations existent pour l'emballage sous bande, par exemple un empileur de cartouches de cahiers empilés qui insère une plaque de bois à chaque extrémité de la cartouche de boîtes pliantes (FR-2869598A1). Cette technique peut éviter d'endommager les articles plats aux extrémités mais n'empêche pas plusieurs des autres inconvénients de la mise sous bande.

D'autres approches (US-2012031897, EP-2431283, MX-2008003773) permettent de former des emballages réutilisables, mais ces emballages ont un usage générique et leur utilisation pour le conditionnement d'articles plats tels que des boîtes pliantes n'est pas pratique. Ils sont notamment difficilement adaptables aux empaqueteurs de boîtes pliantes et plus dispendieux comparativement aux caisses de carton ondulé.

US 2011/017616 A1, US 1 929 161 A, US 2007/039848 A1 et US2006/081485 A1 décrivent des dispositifs de l'art antérieur.

En particulier, US 2011/017616 A1 décrit un dispositif pour former un emballage autoportant à structure légère non fermée servant au conditionnement d'une cartouche d'articles plats, le dispositif comprenant une paire de supports latéraux individuels et rigides, chaque support latéral comprenant une paroi latérale principale incluant une face intérieure et une face extérieure, chaque support latéral ayant également une partie interne, le dispositif comprenant également des moyens pour maintenir les supports latéraux en position de conditionnement contre la cartouche. Chaque support latéral de ce dispositif comprend quatre rebords intérieurs qui bordent la face intérieure de la paroi latérale principale, le premier rebord s'étendant le long d'une arête inférieure de la paroi latérale principale, les deuxième et troisième rebords s'étendant le long d'une arête verticale correspondante de la paroi latérale principale, et le quatrième rebord s'étendant le long d'une arête supérieure de la paroi latérale principale. Dans ce dispositif, le rebord situé le long de l'arête inférieure de la paroi latérale principale de chaque support latéral constitue la partie interne qui est prévue pour supporter verticalement chacun des articles plats.

Malgré tout ce qui a déjà été proposé au fil des années, des améliorations dans le domaine technique concerné demeurent toujours et continuellement nécessaires.

### SOMMAIRE

L'invention a notamment pour objectif de pallier à divers inconvénients de l'état de la technique.

Plus précisément, un objectif de l'invention est de permettre la création d'un emballage réutilisable et économique pour l'industrie des boîtes pliantes et pour d'autres types d'articles plats.

Un autre objectif de l'invention est de pouvoir contrôler la compression des articles plats juxtaposés afin de préserver leur mémoire de forme.

Un autre objectif de l'invention est de permettre l'emballage hermétique d'articles plats lorsque cela est nécessaire.

Un autre objectif de l'invention est de permettre l'empilage d'emballage contenant des articles plats en faisant supporter leur poids par des supports latéraux.

Un autre objectif de l'invention est de pouvoir faciliter et optimiser l'efficacité du transport et de l'entreposage des supports latéraux du dispositif d'emballage après leur utilisation, à savoir lors de leur retour à vide vers un endroit où ces supports latéraux pourront être réutilisés à nouveau pour le conditionnement de d'autres articles plats. L'invention permet notamment de maximiser la quantité de supports latéraux vides pouvant être placés sur une palette de transport ainsi que de minimiser le temps d'empilage.

Un autre objectif de l'invention est de pouvoir adapter le processus d'emballage des boîtes pliantes ou autres articles plats pour un fonctionnement avec le dispositif d'emballage réutilisable de la présente invention.

En bref, le dispositif inclut une paire de supports latéraux rigides qui retiennent une cartouche d'articles plats juxtaposés, sur une longueur fixe, afin de contrôler la compression des articles plats, notamment des articles plats qui ont une mémoire de forme ou un effet ressort. Ce dispositif avec supports latéraux se distingue des emballages de l'art antérieur par le fait que les supports latéraux forment une structure légère et ouverte qui utilise également la rigidité des articles plats conditionnés, sur le sens de leur largeur, pour former un emballage autoportant.

Selon un premier aspect, le concept propose un dispositif pour former un emballage autoportant à structure légère non fermée servant au conditionnement d'une cartouche d'articles plats individuels, chaque article plat ayant une hauteur, une largeur et une épaisseur, laquelle épaisseur est de dimension inférieure à la largeur et à l'épaisseur, la cartouche étant formée d'une multiplicité de ces articles plats placés en juxtaposition directe et alignés, le long d'un axe longitudinal rectiligne, dans le sens de l'épaisseur des articles plats, la cartouche ayant une hauteur, une largeur et une longueur, la longueur de la cartouche étant dans le sens de l'axe longitudinal, le dispositif incluant : une paire de supports latéraux individuels et rigides, lesquels sont mutuellement opposés et configurés pour être placés en appui latéral direct sur des côtés latéraux respectifs de la cartouche, chaque support latéral comprenant une paroi latérale principale configurée pour être disposée parallèlement à l'axe longitudinal dans l'emballage, la paroi latérale principale incluant une face extérieure et une face intérieure, la face intérieure étant configurée pour être en appui direct sur une arête latérale correspondante de chacun des articles plats dans la cartouche afin de les immobiliser dans une cavité formée entre les deux faces intérieures opposées des deux supports latéraux, la cavité ayant une hauteur et une longueur qui sont au moins respectivement égales à la hauteur et à la longueur de la cartouche, chaque support latéral ayant également une partie interne pour supporter verticalement chacun des articles plats dans la cavité; et
des moyens configurés pour être intégrés à l'emballage autoportant pour maintenir les supports latéraux en positon de conditionnement contre la cartouche se caractérisant essentiellement en ce que les deux supports latéraux sont configurés pour s'imbriquer lorsqu'ils ne sont pas utilisés autour d'une cartouche,
en ce que :
chaque support latéral comprend trois rebords intérieurs qui bordent la face intérieure de la paroi latérale principale, le premier rebord s'étendant le long d'une arête inférieure de la paroi latérale principale, et les deuxième et troisième rebords s'étendant le long d'une arête verticale correspondante de la paroi latérale principale, la paroi latérale principale incluant une arête supérieure dépourvue de rebord intérieur pour faciliter un chargement des articles plats par le haut; ou
chaque support latéral comprend quatre rebords intérieurs qui bordent la face intérieure de la paroi latérale principale, le premier rebord s'étendant le long d'une arête inférieure de la paroi latérale principale, les deuxième et troisième rebords s'étendant le long d'une arête verticale correspondante de la paroi latérale principale, et le quatrième rebord s'étendant le long d'une arête supérieure de la paroi latérale principale,
en ce que le rebord situé le long de l'arête inférieure de la paroi latérale principale de chaque support latéral constituant la partie interne qui supporte verticalement chacun des articles plats et sur laquelle une portion d'une arête inférieure de chacun des articles plats vient s'appuyer dans l'emballage,
et en ce que :
   les rebords situés le long de chaque arête verticale de la paroi latérale principale de chaque support latéral comprennent chacune une encoche à une extrémité, les deux encoches étant mutuellement alignées pour permettre une imbrication des deux supports latéraux de la paire du côté de leurs faces intérieures lorsqu'ils sont inutilisés.

Selon un autre aspect, le présent concept propose une paire de supports latéraux assurant le maintien, le contrôle de la compression et la protection d'une cartouche d'articles plats, préférablement identiques, disposés côte à côte dans une même orientation ou en mode alterné par paquet, la paire de supports latéraux formant une structure non fermée de chaque côté de la cartouche. Cette paire de supports latéraux peut avoir des ouvertures qui sont découpées dans la paroi plane d'au moins l'une d'entre-elles. De plus, il est possible que le premier support latéral comprenne un rebord orienté vers l'intérieur afin de délimiter un premier réceptacle latéral configuré pour accueillir l'un des côtés latéraux de la cartouche constitué par la multiplicité d'articles plats, et que le deuxième support latéral comprenne également un rebord orienté vers l'intérieur afin de délimiter un deuxième réceptacle latéral configuré pour accueillir l'autre côté latéral de la cartouche, les premier et deuxième réceptacles pouvant être symétriques. Les supports latéraux peuvent être notamment faits d'un matériau en matière plastique, en aluminium ou autre métal, ou en fibre de carbone. Si désiré, la paroi externe de chaque support latéral peut ainsi comporter un profil pouvant faciliter le cerclage par bande des supports latéraux autour de la cartouche et son maintien en place.

Selon un autre aspect, le présent concept propose un emballage conditionné autoportant se caractérisant essentiellement en ce qu'il comprend un dispositif selon la présente invention et une cartouche faite d'un ensemble d'articles plats ayant une forme sensiblement parallélépipédique et qui sont maintenus en position sous l'effet d'une force de compression transmise à l'aide de deux supports latéraux, ces articles plats étant placés en juxtaposition directe et alignés, le long d'un axe longitudinal rectiligne, dans le sens de l'épaisseur des articles plats, chacun des supports latéraux étant positionné de part et d'autre de la cartouche et la cartouche étant immobilisé dans une cavité formée entre deux faces intérieures opposées des deux supports latéraux, la face intérieure étant en appui direct sur une arête latérale correspondante de chacun des articles plats dans la cartouche afin de les immobiliser dans une cavité formée entre les deux faces intérieures opposées des deux supports latéraux, la cavité ayant une hauteur et une longueur qui sont au moins respectivement égales à la hauteur et à la longueur de la cartouche, le rebord intérieur qui s'étend le long de l'arête inférieure de la paroi latérale principale constituant la partie interne qui supporte verticalement chacun des articles plats et sur laquelle une portion d'une arête inférieure de chacun des articles plats s'appuie dans l'emballage.

Ces supports latéraux peuvent être attachés de différentes façons, par exemple en utilisant au moins l'une des technologies suivantes : cerclage, ficelage, enroulement par pellicule étirable et recouvrement par pellicule rétrécissable sous l'effet de la chaleur. D'autres techniques sont également possibles.

Selon un autre aspect, le présent concept propose une palette prête à livrer incluant une multiplicité d'articles plats identiques et disposés en juxtaposition pour former des emballages conditionnés autoportants, tels que ceux définis précédemment. Préférablement, le contact entre deux emballages conditionnés ne se fait qu'au niveau de leurs supports latéraux. Néanmoins, il est également possible de n'avoir aucun contact direct entre deux emballages conditionnés adjacent lors de leur manipulation. Selon un autre aspect, le présent concept propose une méthode de fabrication d'un emballage autoportant à l'aide du dispositif tel que défini précédemment, la méthode incluant :
- la mise en position des supports latéraux pour former la cavité ayant un écartement légèrement supérieur à la largeur de la cartouche et le blocage de ces supports latéraux en position durant un chargement des articles plats dans la cavité;
- le remplissage de la cavité par la multiplicité d'articles plats unitaires afin de former la cartouche;
- optionnellement, la manutention des articles plats préassemblés sous forme de cartouche vers la cavité située entre les supports latéraux; et
- le conditionnement de la cartouche en exerçant, à l'aide des supports latéraux, une pression sur les arêtes latérales de chaque article plat dans la cartouche.

Si désiré, la pression latérale exercée à l'aide des supports latéraux peut être ajustée afin de ne pas affecter ou altérer les articles plats.

La méthode de fabrication peut être configurée pour une production continue ou discontinue des emballages.

Lors de l'emballage des articles plats, ceux-ci peuvent être chargés manuellement et/ou automatiquement entre chaque support latéral, par exemple de la même manière qu'ils sont chargés dans une caisse de carton ondulé. Les supports latéraux sont positionnés et maintenus en place durant l'étape de remplissage, par exemple à l'aide d'éléments de positionnement intégrés aux supports latéraux ou par d'autres techniques. Lorsque le remplissage est terminé, la cartouche d'articles plats et la paire de supports latéraux sont attachés pour former un emballage autoportant pouvant par exemple être empilé directement sur une palette de transport.

Cette invention permet donc avantageusement de remédier à de nombreux inconvénients des méthodes d'emballage traditionnelles pour les articles plats puisqu'elles peuvent permettre notamment :
- la réutilisation quasi illimitée des supports latéraux;
- d'offrir une solution économiquement concurrentielle aux caisses de carton ondulé;
- de former une structure rigide mais légère et de longueur fixe autour des articles plats afin de les retenir avec un taux de compression contrôlé;
- de protéger la cartouche afin d'éviter d'endommager les articles plats lors d'une étape de scellage et/ou de cerclage, ainsi que lors de leur manipulation;
- de former un emballage autoportant pouvant permettre l'empilage, sur une palette de transport, d'un grand nombre d'articles plats conditionnés sans risquer de les endommager; et
- si désiré, de former un scellage hermétique en utilisant, par exemple, une pellicule étirable ou rétrécissable sous l'effet de la chaleur.

Davantage de détails sur les différents aspects du concept proposé et sur les différentes combinaisons possibles de caractéristiques techniques ressortiront à la lumière de la description détaillée qui suit et des figures correspondantes.

### BRÈVE DESCRIPTION DES FIGURES

La figure 1 illustre un exemple d'un article plat, plus particulièrement une boîte pliante.
La figure 2 est une vue similaire à la figure 1, dans laquelle l'article plat reçoit une force sur l'extérieur de son panneau principal supérieur pour fins de démonstration.
La figure 3 est une vue isométrique illustrant un exemple d'une multiplicité d'articles plats qui sont placés en juxtaposition afin de former une cartouche, ces articles plats étant tous identiques à celui de la figure 1.
La figure 4 est une vue isométrique et explosée montrant un exemple de supports latéraux selon le concept proposé et qui viendront en appui latéral contre la cartouche de la figure 3.
La figure 5 est une vue isométrique montrant la face intérieure du support latéral utilisé à la figure 4.
La figure 6 est une vue isométrique montrant la face extérieure du support latéral utilisé à la figure 4.
La figure 7 est une vue isométrique montrant la cartouche et les supports latéraux illustrés à la figure 4 lorsque les supports latéraux sont en position d'utilisation.
La figure 8 est une vue similaire à la figure 7 mais montrant un exemple de pellicule étirable placée autour des supports latéraux et de la cartouche pour former l'emballage final.
La figure 9 est une vue isométrique illustrant un exemple d'emballage autoportant dans lequel les supports latéraux sont attachés à l'aide de bandes sous tension.
La figure 10 est une vue isométrique illustrant un exemple de palette de transport sur laquelle ont été placés plusieurs emballages autoportants.
La figure 11 est une vue isométrique illustrant que les deux supports latéraux comme ceux montrés à la figure 4 peuvent s'imbriquer lorsqu'ils ne sont pas utilisés autour d'une cartouche.
La figure 12 est une vue isométrique illustrant un exemple de palette de transport sur laquelle est placée une grande quantité de paires de supports latéraux imbriqués comme ceux montrés à la figure 11.
Les figures 13 et 14 sont des vues isométriques montrant respectivement la face intérieure et la face extérieure d'un exemple de variante du support latéral.
Les figures 15 et 16 sont des vues isométriques montrant respectivement la face intérieure et la face extérieure d'un exemple d'une autre variante du support latéral.
Les figures 17 et 18 sont des vues isométriques montrant respectivement la face intérieure et la face extérieure d'un exemple d'une autre variante du support latéral.
Les figures 19 et 20 sont des vues isométriques montrant respectivement la face intérieure et la face extérieure d'un exemple d'une autre variante du support latéral.
Les figures 21 et 22 sont des vues isométriques montrant respectivement la face intérieure et la face extérieure d'un exemple d'une autre variante du support latéral.
La figure 23 est une vue d'élévation illustrant un exemple d'un article plat ayant une forme asymétrique entre le haut et le bas.
La figure 24 est une vue d'élévation illustrant un exemple de paire de supports latéraux servant à soutenir des articles plats de forme asymétrique comme celui de la figure 23.
La figure 25 est une vue isométrique illustrant l'un des supports latéraux utilisés à la figure 24.
La figure 26 est une vue isométrique illustrant les deux supports latéraux de la figure 24 lorsqu'ils sont en position imbriquée.
Les figures 27 et 28 sont des vues isométriques montrant respectivement la face intérieure et la face extérieure d'un exemple d'une autre variante du support latéral.
La figure 29 est une vue agrandie de la région identifiée à la figure 27.
La figure 30 est une agrandie de la région identifiée à la figure 28.
La figure 31 est une vue isométrique et explosée illustrant un exemple de supports latéraux qui utilisent une base transversale de montage lors du chargement des articles plats pour former la cartouche.
La figure 32 est une vue isométrique illustrant les supports latéraux et la base transversale de montage de la figure 31, dans leur position assemblée.
La figure 33 est une vue de face de la cartouche de la figure 32 avec les supports latéraux et sa base transversale de montage.
La figure 34 est une vue agrandie montrant le système de connexion entre le bas de l'un des supports latéraux et la base transversale de montage de la figure 33.
La figure 35 est une vue similaire à la figure 31 mais dans laquelle le système de connexion entre les supports latéraux et la base transversale de montage est différent de celui utilisé dans l'exemple de la figure 31.
La figure 36 est une vue de face illustrant les supports latéraux et la base transversale de montage de la figure 35 dans leur position assemblée.
La figure 37 est une vue agrandie montrant le système de connexion entre l'un des supports latéraux et la base transversale de montage de la figure 36.

### DESCRIPTION DÉTAILLÉE

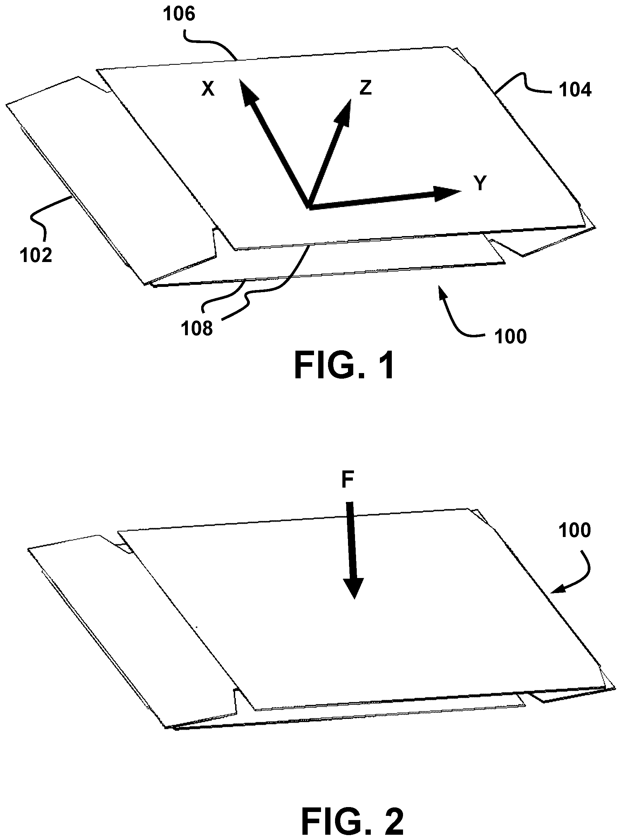

La figure 1 illustre un exemple d'un article plat, plus particulièrement une boîte pliante 100. La boîte 100 n'est qu'un exemple parmi une très vaste gamme de possibilités. Il est donc important de souligner que les articles plats dont il est question ne se limitent pas qu'aux boîtes pliantes et que d'autres types d'articles plats peuvent être avantageusement conditionnés en utilisant le concept proposé.

Les articles plats peuvent être faits en différents matériaux, par exemple en carton, en carton compact fort, en carton ondulé, en plastique semi-rigide, en carton avec microcannelures, etc. De plus, le fait que la majeure partie de la description détaillée ci-dessous présente les articles plats comme étant des boîtes pliantes, notamment des boîtes comme celle de la figure 1, est uniquement pour simplifier le texte descriptif. De plus, la forme de la boîte 100 est essentiellement générique dans les différentes figures.

La boîte 100 a une forme de profil qui est sensiblement parallélépipédique dans la figure 1, quoique des formes différentes soient possibles selon les besoins. La boîte 100 est dans sa configuration plane avant son utilisation, à savoir que la boîte 100 est vide, ouverte sur deux extrémités opposées et que les quatre panneaux de ce modèle de boîte 100 sont placés pour réduire le volume intérieur de la boîte 100 en vue de son conditionnement. Le corps de cette boîte 100, formé par les quatre panneaux collés, a une tendance naturelle à rester légèrement entrouvert lorsque la boîte 100 est simplement posée sur une surface alors qu'elle est en configuration plane, comme illustré à la figure 1. Cette tendance naturelle est également appelée « mémoire de forme ». La boîte 100 est considérée comme étant en configuration plane même si elle est légèrement entrouverte par ce phénomène de cette mémoire de forme. Le corps de la boîte 100 présente ainsi une certaine élasticité, ou « effet ressort », qui peut être très utile, voire même nécessaire, lorsque la boîte 100 sera utilisée plus tard dans des équipements d'emballage, notamment des équipements automatisés servant à manipuler chaque boîte 100 avant son utilisation pour laquelle elle a été conçue.

La boîte 100, dans sa configuration plane, a une longueur, une largeur et une épaisseur. La longueur correspond à l'axe X du système de coordonnées de la figure 1, la largeur correspondant à l'axe Y et l'épaisseur correspondant à l'axe Z. L'épaisseur de la boîte 100, dans sa configuration plane, est d'une dimension qui est significativement moindre que celles de la longueur et de la largeur. Les axes X et Y définissent le plan transversal de la boîte 100. La boîte 100 est sensiblement de forme rectangulaire dans l'exemple montré à la figure 1. D'autres formes sont également possibles.

La boîte 100 possède des arêtes latérales 102, 104. Elle possède également une arête supérieure 106 et une arête inférieure 108. Dans cet exemple, l'arête supérieure 106 est constituée par les arêtes supérieures des différents panneaux formant la boîte 100 et l'arête inférieure 108 est constituée par les arêtes inférieures des différents panneaux formant la boîte 100.

La figure 2 est une vue similaire à la figure 1 mais elle montre une force F qui est exercée au centre du panneau principal supérieur de la boîte 100. Cette force F n'est que pour des fins de démonstration de la mémoire de forme. Comme on peut le constater, la force F rapproche alors les deux panneaux principaux. Lorsque la boîte 100 possède une mémoire de forme, elle reviendra spontanément à la position montrée à la figure 1 dès que la force F sera enlevée.

À la sortie des équipements de fabrication des boîtes 100, un certain nombre de boîtes 100 individuelles sont réunies et juxtaposées afin de former un lot ou un paquet qui est appelé une cartouche d'articles plats. Les boîtes 100 seront transportées et entreposées jusqu'à leur utilisation alors qu'elles sont regroupées en cartouches afin de faciliter leur manutention et d'en réduire l'encombrement. Les boîtes 100 peuvent être placées dans les cartouches selon une même orientation et/ou être placées en alternance, individuellement ou par groupe.

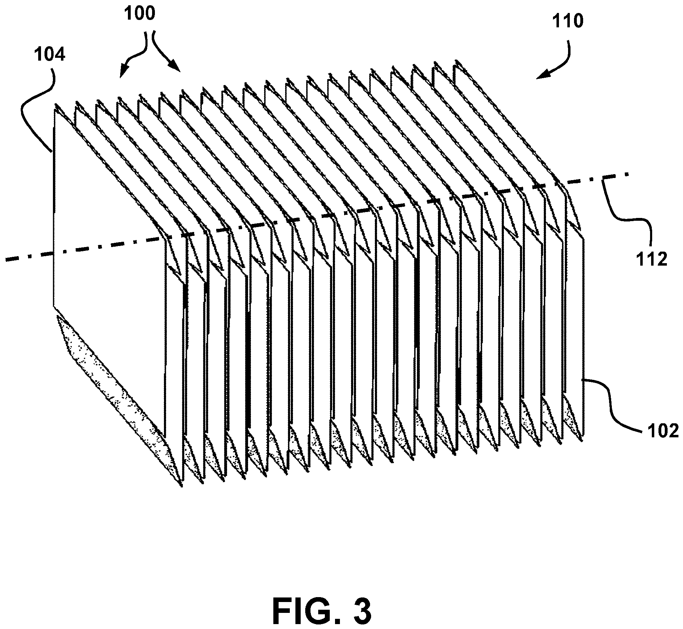

La figure 3 est une vue isométrique qui illustre un exemple d'une cartouche 110 formée par la juxtaposition de plusieurs boîtes 100 de la figure 1 dans le sens de leur épaisseur, à savoir dans le sens de l'axe Z (figure 1). Les boîtes 100 de la cartouche 110 sont toutes identiques. Elles sont parallèles entre elles et sont disposées le long d'un axe longitudinal 112, lequel est rectiligne et traverse le centre géométrique des boîtes 100. Les arêtes latérales 102, 104 de chaque boîte 100 sont alors alignées et placées sensiblement à la verticale de chaque côté de la cartouche 110.

Le défi est de préserver l'élasticité naturelle et l'intégrité de chaque boîte 100 entre sa fabrication jusqu'à son retrait de la cartouche 110, donc d'éviter d'avoir à comprimer les boîtes 100 directement dans le sens de leur épaisseur à l'aide de bandes sous tension mais sans devoir les placer dans un suremballage constitué par une caisse de carton ondulé ou d'un contenant du même genre.

L'approche proposée par le présent concept fait appel à un dispositif qui comprend une paire de supports latéraux 130 rigides, lesquels sont réutilisables et économiques, afin de créer un emballage autoportant 120 avec la cartouche 110 elle-même.

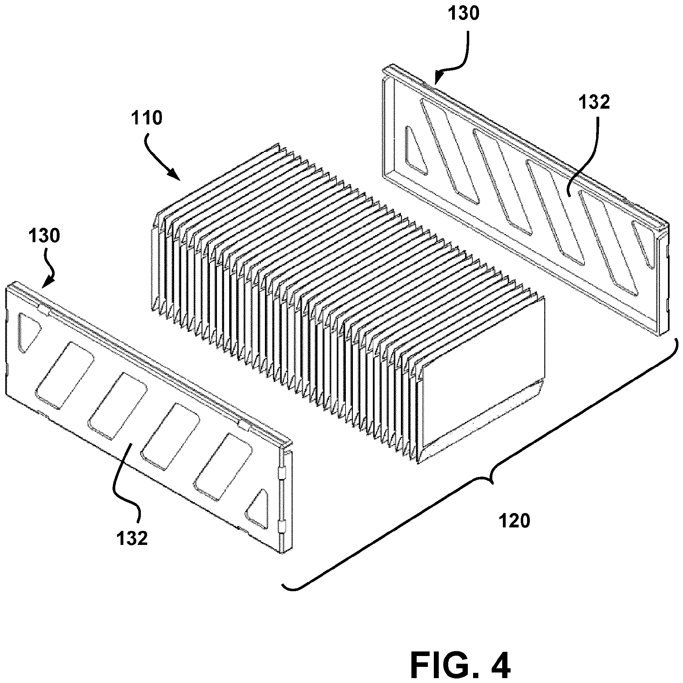

La figure 4 est une vue isométrique et explosée montrant un exemple de supports latéraux 130 selon le concept proposé et qui viendront en appui latéral contre la cartouche 110 de la figure 3. Ces supports latéraux 130 sont positionnés verticalement en appui sur des côtés latéraux opposés de la cartouche 110. Ils seront ainsi mutuellement parallèles lors de leur utilisation sur la cartouche 110 pour former une structure rigide mais légère de l'emballage 120. Les supports latéraux 130 ont une forme rectangulaire dans l'exemple illustré. La longueur et la hauteur de ces supports latéraux 130 correspondent approximativement à la longueur et à la hauteur de la cartouche 110.

Il est à noter que les boîtes 100 dans la cartouche 110 peuvent être partiellement comprimées dans le sens de leur épaisseur afin de réduire le volume. Le taux de compression est cependant contrôlé pour être nettement inférieur à celui des boîtes comprimées fermement par des bandes sous tension selon les méthodes antérieures. Le taux de compression des boîtes 100 à l'intérieur de l'emballage 120 est choisi de façon à ce que les boîtes 100 conservent la majeure partie, sinon la totalité de leur mémoire de forme originale lorsqu'elles seront retirées de cet emballage 120.

La longueur et la hauteur des supports latéraux 130 sont déterminées par les dimensions des boîtes 100 de la cartouche 110, la quantité de boîtes 100 par cartouche et leur taux de compression souhaité. La hauteur des supports latéraux 130 est préférablement plus grande que celle des boîtes 100 afin d'éviter qu'elles ne dépassent, par le haut et/ou par le bas, et qu'elles puissent alors être endommagées lors de la superposition des emballages 120, par exemple sur une palette de transport ou lors de leur manipulation.

Les supports latéraux 130 sont identiques dans l'exemple illustré afin de simplifier la gestion des inventaires et les coûts de production. Le support latéral 130 de gauche et le support latéral 130 de droite sont donc identiques. Cependant, il demeure possible de fabriquer une paire de supports latéraux 130 où les deux ne seraient pas identiques.

Puisque les supports latéraux 130 sont identiques dans l'exemple qui est présentement décrit, la présente description détaillée qui suit va se référé au « support latéral 130 » au singulier.

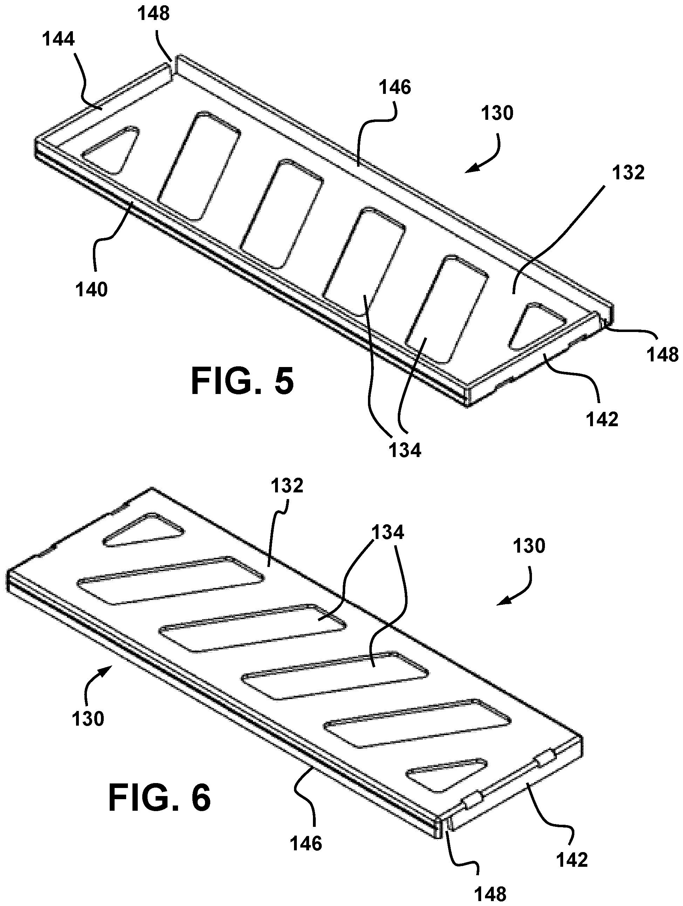

La figure 5 est une vue isométrique montrant la face intérieure du support latéral 130 utilisé dans la figure 4. La figure 6 est une vue isométrique montrant son côté extérieur. Comme on peut le constater, le support latéral 130 a une paroi latérale principale 132 qui est sensiblement rectangulaire et de forme plane. Celle-ci peut comprendre une ou plusieurs ouvertures 134 de formes diverses, comme montré dans cet exemple, afin de réduire la quantité de matériau nécessaire à sa fabrication et aussi pour rendre le support latéral 130 plus léger. La paroi latérale principale 132 sera disposée sensiblement à la verticale lors de son utilisation courante dans un emballage 120.

Dans l'exemple illustré notamment aux figures 5 et 6, le support latéral 130 possède quatre rebords 140, 142, 144, 146 qui projettent vers l'intérieure et de façon perpendiculaire à la paroi latérale principale 132. Ils s'étendent chacun le long d'une arête correspondante de la paroi latérale principale 132 et bordent la face intérieure de celle-ci. Chacun des rebords 140, 142, 144, 146 est de forme généralement plate et rectiligne. La largeur de ces rebords 140, 142, 144, 146 est préférablement identique, par exemple de 3 à 5 cm, tout le tour de la paroi latérale principale 132. La largeur est toutefois maintenue à une valeur réduite afin de minimiser l'encombrement des supports latéraux 130 vides lorsqu'ils ont imbriqués ou autrement empilés. Les rebords 140, 142, 144, 146 confèrent également une résistance accrue à la flexion ou à d'autres modes de déformation.

En outre, les rebords 140, 142, 144, 146 permettent de retenir solidement les articles plats de la cartouche 110, par le dessus et le dessous, mais aussi à l'avant et à l'arrière, lorsque le support latéral 130 vient s'appuyer sur le côté latéral de la cartouche 110. Les boîtes 100 de la cartouche 110 sont alors immobilité lorsque l'emballage 120 est complété. La surface supérieure du rebord inférieur 140 permet notamment de recevoir le bas des boîtes 100 de la cartouche 110 afin de les soutenir contre l'action de la gravité. Les rebords 140, 142, 144, 146 sont moulés intégralement ou autrement fixés solidement à la paroi latérale principale 132. Il est à noter que des variantes de ces différentes caractéristiques sont possibles.

Les rebords verticaux 142, 144 dans l'exemple incluent également des encoches opposées 148 à l'une de leurs extrémités (dans ce cas-ci, à l'extrémité supérieure). Ces encoches 148 sont mutuellement alignées afin de permettre l'imbrication des supports latéraux 130 vides pour réduire l'épaisseur de l'espace occupé par les paires et ainsi optimiser la quantité pouvant être placés sur une palette de transport après chaque utilisation. Des variantes sont toutefois possibles.

Le support latéral 130 est préférablement fabriqué en une seule pièce monolithique ayant une épaisseur suffisante pour obtenir la capacité de charge d'empilage maximale souhaitée lors de son utilisation. Il peut être fabriqué en différents matériaux, par exemple en plastique, en aluminium ou en fibre de carbone. D'autres matériaux sont également possibles. Le choix du matériau est déterminé principalement par des facteurs tels que son coût, sa rigidité, le nombre de réutilisations minimums qu'il confère au support, son recyclage possible et ses propriétés phytosanitaires, pour ne nommer que ceux-là.

Si nécessaire, chaque support latéral 130 peut inclure un élément de traçabilité par RFID ou autre dispositif similaire.

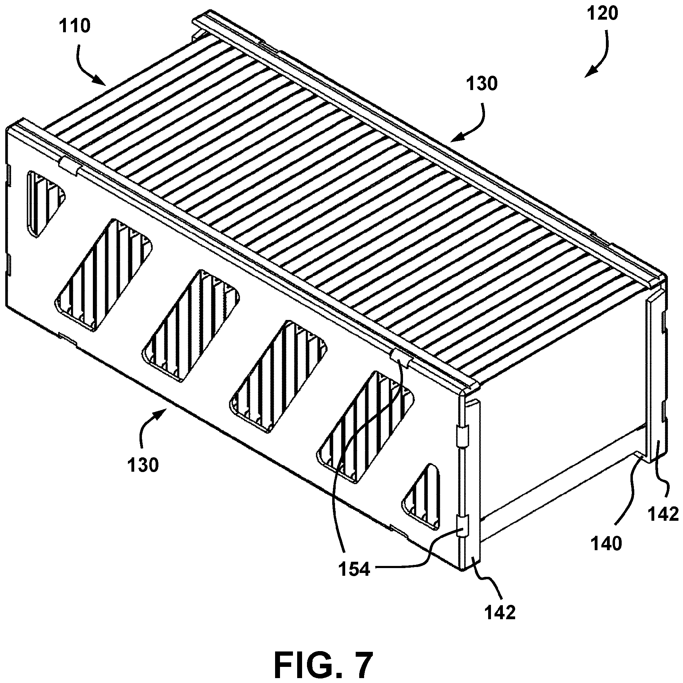

La figure 7 est une vue isométrique montrant la cartouche 110 et ses supports latéraux 130 illustrés à la figure 4 lorsqu'ils sont en position d'utilisation. La face intérieure de la paroi latérale principale 132 de chaque support latéral 130 s'appuie sur toutes les arêtes latérales 102, 104 correspondantes des boîtes 100 dans la cartouche 110.

La compression longitudinale de la cartouche 110 étant limitée par la longueur fixe des supports latéraux 130, il est possible d'utiliser un grand nombre de moyens pour maintenir les supports latéraux 130 en place contre la cartouche 110, lesquels moyens seront intégrés à l'emballage 120. Par exemple, les moyens peuvent être un cerclage horizontal et/ou vertical et/ou un emballage sous pellicule. Une pellicule peut être utilisés avec ou sans cerclage/ficelage pour former un emballage hermétique. La pellicule peut être étirable ou rétrécissable. D'autres moyens sont également possibles.

Une fois attachés, les supports latéraux 130 vont notamment permettre de soutenir le poids des boîtes 100 de la cartouche 110 qui se trouve à l'intérieur et d'éviter son contact direct avec une surface extérieure. D'autre part, les boîtes 100 placées en cartouche peuvent subir une compression relativement importante dans le sens transversal, à savoir selon l'axe Y (figure 1), sans affecter de façon significative leurs propriétés mécaniques à leur sortie de la cartouche 110. La force de compression est alors répartie entre les boîtes 100 sur toute la longueur. La surface intérieure des supports latéraux 130 est également préférablement conçue pour venir s'appuyer sur un maximum de la longueur des arêtes latérales 102, 104 des boîtes 100 et ainsi éviter de créer des points de pression localisés. Les boîtes 100 de la cartouche 110 deviennent alors une partie intégrante de la structure de l'emballage 120.

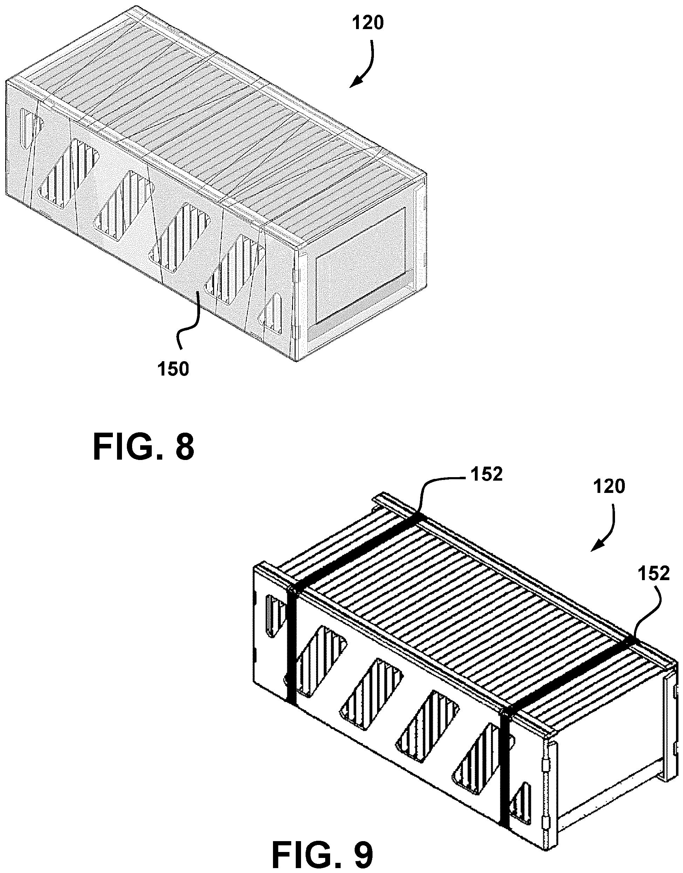

La figure 8 est une vue similaire à la figure 7 mais sur lequel une pellicule protectrice, par exemple une pellicule imperméable, a été placé afin d'attacher les supports latéraux 130 mais également pour créer une barrière hermétique autour de la cartouche 110. Cette pellicule peut être faite de plastique, notamment de plastique étirable qui a été enroulée à plusieurs reprises autour des supports latéraux 130 et de la cartouche 110. D'autres types de pellicules peuvent aussi être utilisés. Il est à noter que dans la figure 8, et pour des fins d'illustration, la pellicule apparaît comme étant très transparente afin de ne pas cacher les éléments en dessous.

La figure 9 est une vue isométrique illustrant un exemple d'emballage 120 dans lequel les supports latéraux 130 sont attachés à l'aide de bandes sous tension 152, lesquelles sont espacées l'une de l'autre et disposées dans le plan transversal autour des supports latéraux 130. Il est également possible de prévoir le cerclage par des bandes faisant le tour de la paire de supports latéraux 130 de façon horizontale et de combiner plusieurs types de moyens d'attaches.

Comme on peut le constater dans les exemples illustrés, chaque support latéral 130 peut inclure des rainures externes arrondies 154 servant à maintien l'orientation des bandes de cerclage et à mieux répartir la force de serrage dans les coins de l'emballage 120. Ainsi, lorsque des bandes sous tension sont utilisées, elles n'exercent pas une force directement sur les articles plats. Des variantes sont également possibles.

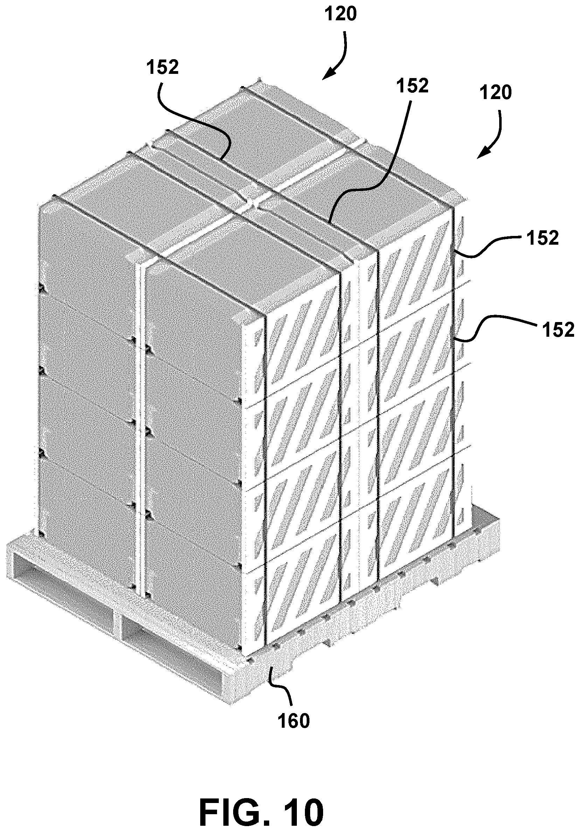

La figure 10 est une vue isométrique illustrant un exemple de palette de transport 160 sur laquelle ont été placés plusieurs emballages 120 complétés. Ces emballages 120 ont été empilés les uns par-dessus les autres directement sur le dessus de la palette de transport 160. L'efficacité de la palettisation des cartouches 110 avec les supports latéraux 130 est sensiblement la même que celle avec des caisses de carton ondulé. Donc, le fait d'utiliser des supports latéraux 130 ne nuit en rien à la capacité de chargement des emballages 120 sur la palette de transport 160. Les supports latéraux 130 ont même l'avantage que le poids des cartouches 110 est transmis seulement entre les supports latéraux 130 et que leur capacité de charge en superposition peut être facilement beaucoup plus grande que dans le cas d'une simple caisse de carton ondulé.

Il est à noter qu'à la figure 10, chaque emballage 120 est attaché par sa propre paire de bandes sous tension 152. Les différents emballages 120 peuvent être arrimés à la palette de transport 160 à l'aide de pellicule étirage ou par tout autre moyen approprié.

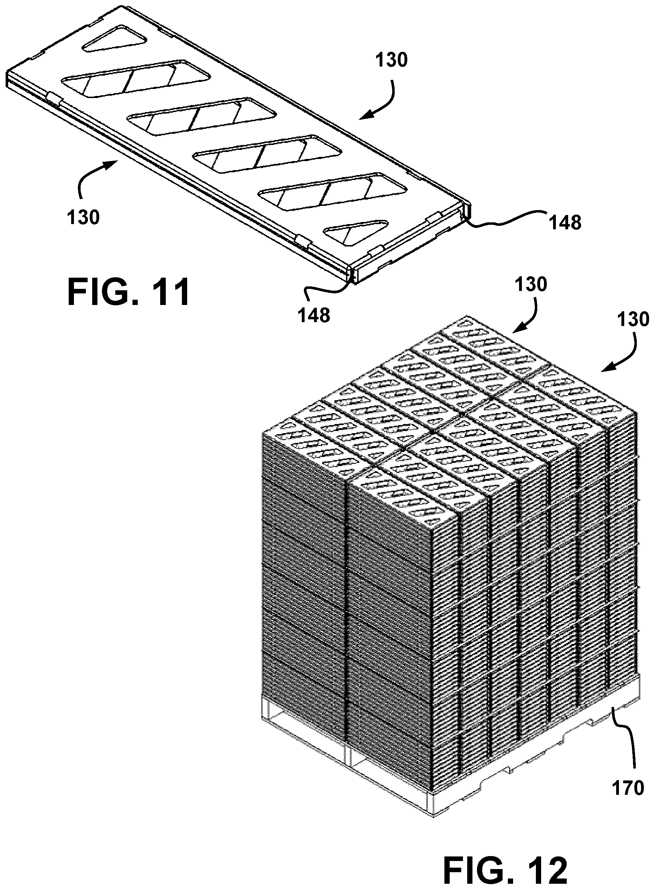

La figure 11 est une vue isométrique illustrant que deux supports latéraux 130 comme ceux montrés à la figure 4 peuvent s'imbriquer lorsqu'ils ne sont pas utilisés autour d'une cartouche. On peut y constater que dans cet exemple, les encoches 148 permettent aux rebords 140, 142, 144, 146 de se croiser à angle droit sans interférer.

La figure 12 est une vue isométrique illustrant un exemple de palette de transport 170 sur laquelle est placée une grande quantité de paires de supports latéraux 130 imbriqués comme ceux de la figure 11. Les nombreuses paires de supports latéraux 130 sont placées les unes sur les autres. Le format compact de ces supports latéraux 130 et leur capacité à s'imbriquer par paire permet d'obtenir une grande capacité d'empilage de supports latéraux 130 vides sur la palette de transport 170 afin de minimiser les coûts de transport. Pour une efficacité maximale, il doit être possible d'empiler autant sinon plus de supports latéraux 130 vides sur la palette de transport 170 que de caisses vides en carton ondulé conçues pour recevoir des boîtes 100 de même dimension que ceux utilisés avec des supports latéraux 130. Les supports latéraux 130 peuvent être arrimés sur la palette de transport 170 à l'aide, par exemple, d'une pellicule étirable ou par tout autre moyen approprié.

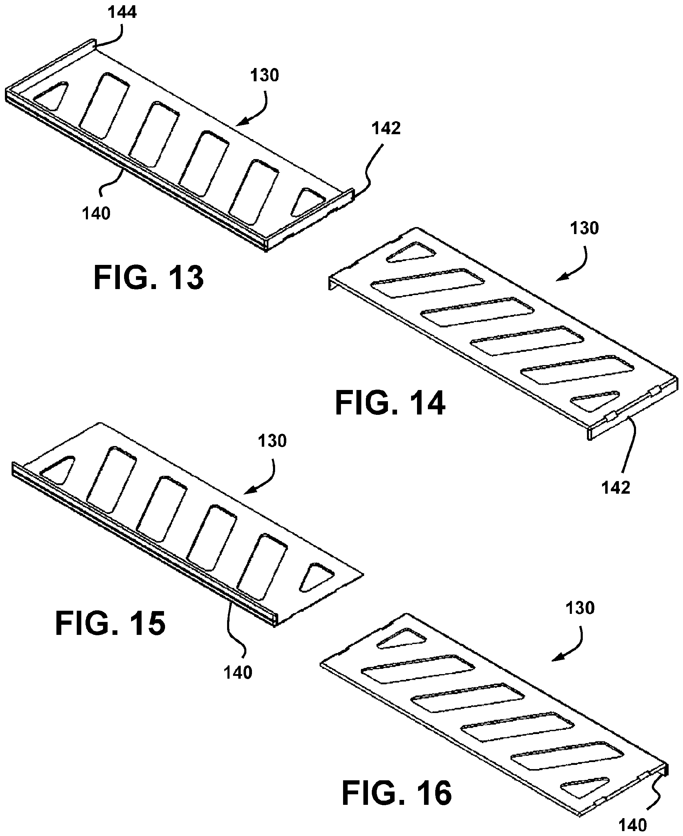

Les figures 13 et 14 sont des vues isométriques montrant respectivement la face intérieure et la face extérieure d'un exemple de variante du support latéral 130. Dans cet exemple, seuls trois rebords 140, 142, 144 sont utilisés. L'arête supérieure est dépourvue de rebord. Le fait d'éliminer ce rebord supérieur permet de faciliter le chargement des boîtes 100 par le haut.

Les figures 15 et 16 sont des vues isométriques montrant respectivement la face intérieure et la face extérieure d'un exemple d'une autre variante du support latéral 130. Dans cet exemple, un seul rebord est utilisé, à savoir le rebord inférieur 140, ce qui permet notamment un empilage encore plus dense des supports latéraux 130 vides sur une palette de transport ou à un endroit similaire.

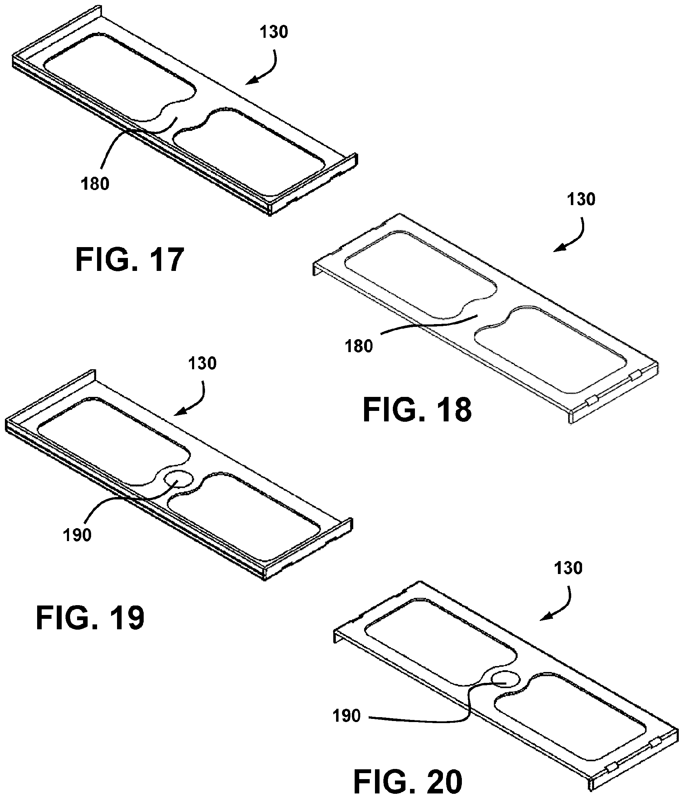

Les figures 17 et 18 sont des vues isométriques montrant respectivement la face intérieure et la face extérieure d'un exemple d'une autre variante du support latéral 130. Dans cet exemple, le support latéral 130 inclut une partie centrale élargie plane 180, située au centre de sa paroi latérale principale 132. Ceci permet notamment le maintien du support latéral 130 par ventouse lors de son positionnement sur la cartouche 110.

Les figures 19 et 20 sont des vues isométriques montrant respectivement la face intérieure et la face extérieure d'un exemple d'une autre variante du support latéral 130. Dans cet exemple, le support latéral 130 inclut une partie centrale aimantée ou ferromagnétique 190, située au centre de sa paroi latérale principale 132. Ceci permet notamment le maintien du support latéral 130 par force magnétique lors de son positionnement sur la cartouche 110.

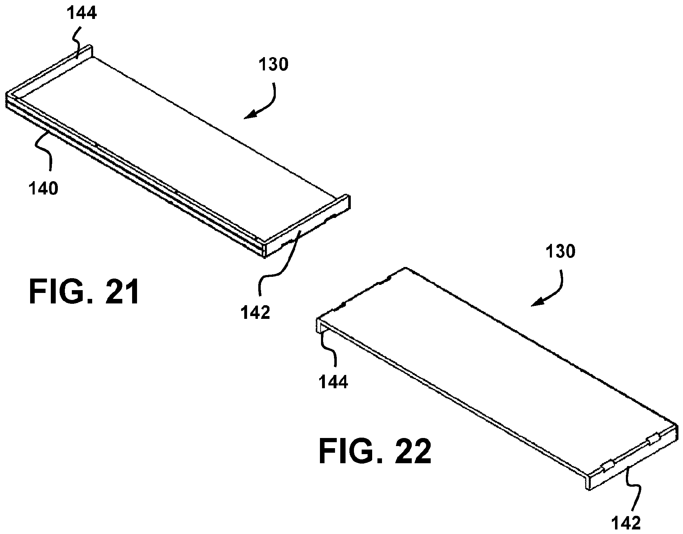

Les figures 21 et 22 sont des vues isométriques montrant respectivement la face intérieure et la face extérieure d'un exemple d'une autre variante du support latéral 130. Dans cet exemple, la paroi latérale principale est dépourvue d'ouvertures.

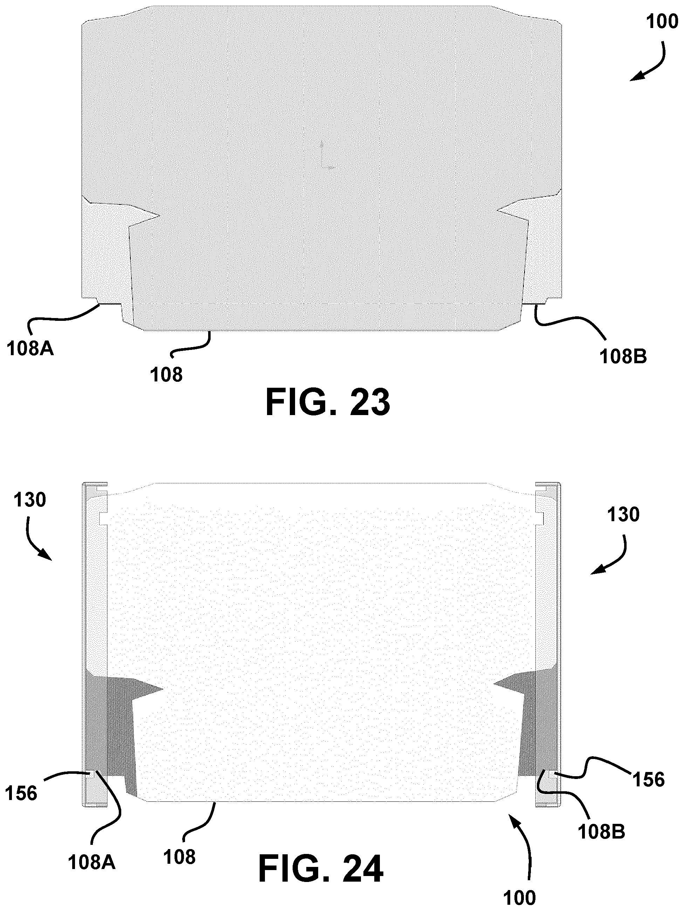

La figure 23 est une vue d'élévation illustrant un exemple d'un article plat, dans ce cas-ci une boîte 100, ayant une forme asymétrique entre le haut et le bas de la boîte 100 dans sa configuration plane. La boîte 100 comprend notamment une arête inférieure 108 avec des parties latérales tronquées 108A, 108B, lesquelles ne sont pas alignées avec la partie centrale de l'arête inférieure 108. Ce genre de boîte 100 complique donc leur soutien à l'intérieur de l'emballage 120 car les rebords inférieurs 140 pourront difficilement atteindre la partie centrale de l'arête inférieure 108 qui se trouve tout en bas sans être d'une longueur excessive qui compliquera l'empilement et augmentera l'encombrement des supports latéraux 130 vides.

La figure 24 est une vue d'élévation illustrant un exemple de paire de supports latéraux 130 servant à soutenir une cartouche de boîtes 100 ayant toutes une forme asymétrique comme celle montrée à la figure 23. Comme on peut le constater, chaque support latéral 130 de cet exemple comprend une lisse de soutien interne 156 dont la surface supérieure viendra soutenir le dessous des parties latérales tronquées 108A, 108B, donc soutenir l'ensemble de la boîte 100. Ces supports latéraux 130 ont donc une pièce additionnelle intérieure qui leur permet de s'adapter aux formes non rectangulaires des articles plats 100 à conditionner. La lisse de soutien interne 156 peut être moulée à même le reste du support latéral 130 correspondant, ou encore être une pièce amovible. La lisse de soutien interne 156 est de section carrée dans l'exemple. Des variantes sont possibles.

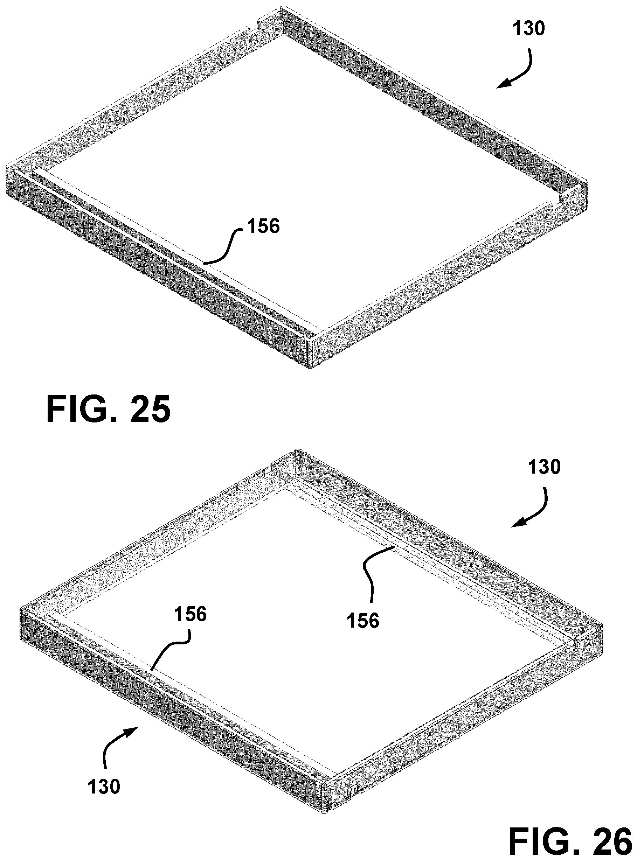

La figure 25 est une vue isométrique illustrant l'un des supports latéraux 130 de la figure 24.

La figure 26 est une vue isométrique illustrant les deux supports latéraux 130 de la figure 24 lorsqu'ils sont en position imbriquée grâce à des encoches additionnelles qui permettent de compenser la présence des lisses de soutien interne 156, lesquelles sont visibles à la figure 26 par transparence uniquement pour des fins d'illustration. Des variantes sont également possibles.

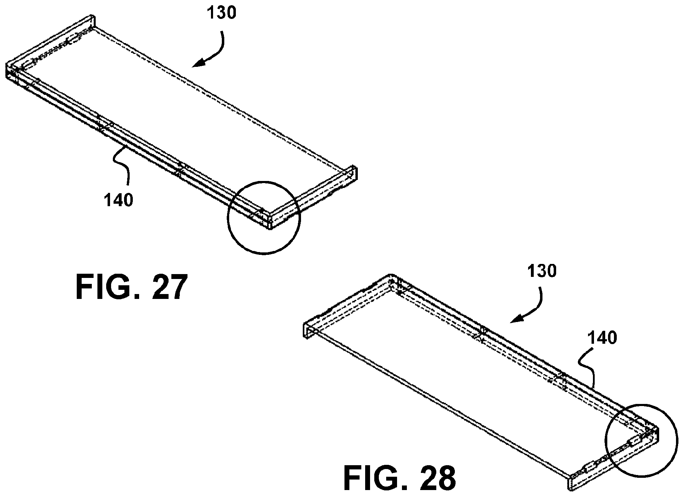

Les figures 27 et 28 sont des vues isométriques montrant respectivement la face intérieure et la face extérieure d'un exemple d'une autre variante du support latéral 130. Le support latéral 130 de cet exemple est similaire à celui des figures 21 et 22 mais il comprend un élément de positionnement intégré sur le dessous du rebord inférieur 140, préférablement de type tige/trou.

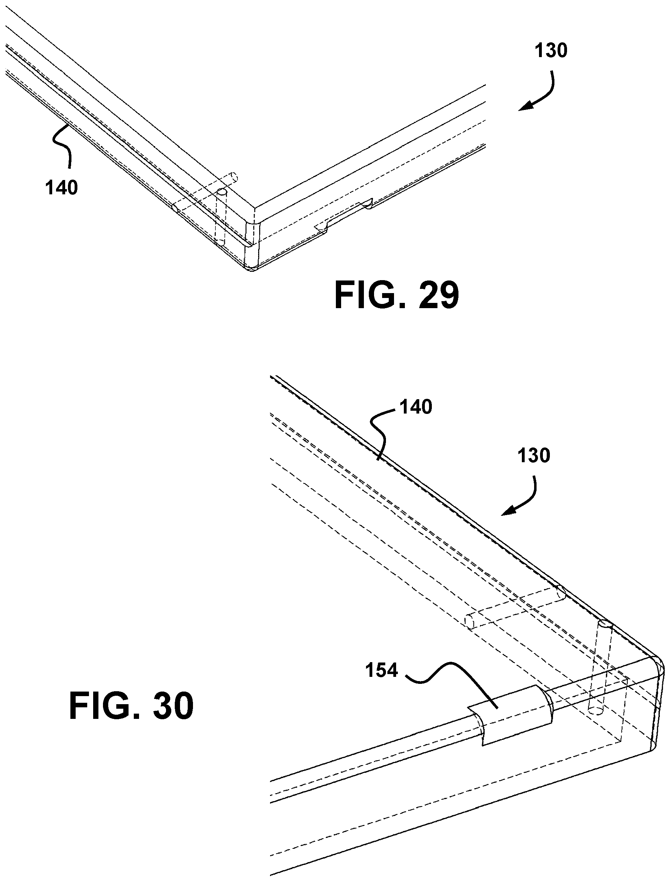

La figure 29 est une vue agrandie de la région identifiée à la figure 27. La figure 30 est une vue agrandie de la région identifiée à la figure 28. Les figures 29 et 30 montrent que le support latéral 130 peut inclure un élément de positionnement, préférablement des trous 158, pour l'insertion de tiges dans le rebord inférieur 140. Il est également possible d'avoir un élément de positionnement avec des fentes pour l'insertion de fourches.

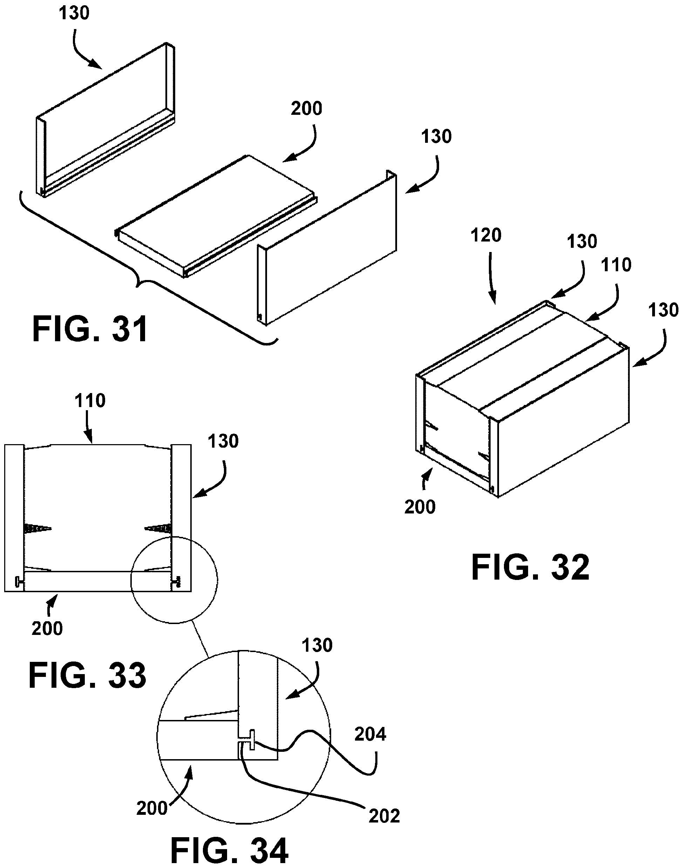

La figure 31 est une vue isométrique et explosée illustrant un exemple de supports latéraux 130 qui utilisent une base transversale de montage 200 lors de la création de la cartouche 110. Les supports latéraux 130 sont alors glissés le long des arêtes latérales de la base de montage 200. La base de montage 200 est placée à l'horizontale et permet de recevoir et de retenir des supports latéraux 130 de différentes longueurs. La même base de montage 200 est réutilisée lors de l'emballage de cartouches 110 subséquentes car elle ne sert que lors de l'étape de chargement.

La figure 32 est une vue isométrique illustrant les supports latéraux 130 et la base transversale de montage 200 de la figure 31 dans leur position assemblée afin de recevoir et de retenir une cartouche 110. La figure 33 est une vue de face de la cartouche 110 de la figure 32 avec les supports latéraux 130 et sa base transversale de montage 200. La figure 34 est une vue agrandie montrant le système de connexion entre le bas de l'un des supports latéraux 130 et la base transversale de montage 200 de la figure 33. Comme on peut le constater, cet exemple montre que la base transversale de montage 200 ayant un système de connexion qui consiste en des parties latérales 202 dont le profil est en forme de « T » et qui s'étendent le long de ses arêtes latérales longitudinales. Les supports latéraux 130 possèdent des rainures 204 dont la forme correspond à celle des parties latérales 202. Les rainures 204 s'étendent également au-travers des rebords verticaux. De cette façon, les supports latéraux 130 peuvent être attachés temporairement à la base de montage 200 par coulissement. La base de montage 200 peut être enlevée une fois que la cartouche 110 est en place. Des variantes sont également possibles.

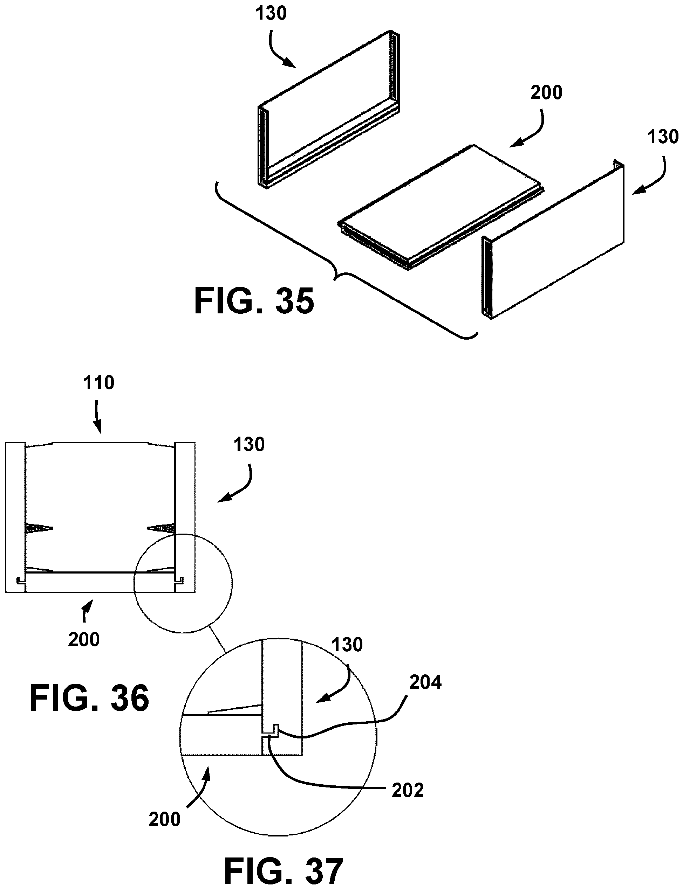

La figure 35 est une vue similaire à la figure 31 mais dans laquelle le système de connexion entre les supports latéraux 130 et la base transversale de montage 200 est différent de celui utilisé dans l'exemple de la figure 31. La figure 36 est une vue de face illustrant les supports latéraux 130 et la base transversale de montage 200 de la figure 35 dans leur position assemblée afin de retenir une cartouche 110. La figure 37 est une vue agrandie montrant le système de connexion entre l'un des supports latéraux 130 et la base transversale de montage de la figure 36. Comme on peut le constater, le système de connexion comprend les parties latérales 202 qui ont un profil en forme de « L » et des rainures 204 de forme correspondante sur les supports latéraux 130.

Il est à noter que plusieurs autres variantes de forme et de configuration sont possibles. De plus, la position relative des parties latérales 202 et des rainures 204 peut être inversée.

La présente description détaillée et les figures correspondantes ne sont que des exemples. Une personne oeuvrant dans le domaine saura reconnaître que des variantes peuvent y être apportées tout en restant dans le cadre du concept proposé.

### NUMÉROS DE RÉFÉRENCE

- 100: boîte / article plat
- 102: arête latérale
- 104: arête latérale
- 106: arête supérieure
- 108: arête inférieure
- 108A: partie latérale tronquée
- 108B: partie latérale tronquée
- 110: cartouche
- 112: axe longitudinal
- 120: emballage autoportant
- 130: support latéral
- 132: paroi latérale principale
- 134: ouverture
- 136: cavité
- 140: rebord inférieur horizontal
- 142: rebord vertical
- 144: rebord d vertical
- 146: record supérieur horizontal
- 148: encoche
- 150: pellicule
- 152: bande sous tension
- 154: rainure externe arrondie
- 156: lisse de soutien interne
- 158: trou
- 160: palette de transport
- 170: palette de transport
- 180: partie centrale élargie plane
- 190: partie centrale aimantée ou ferromagnétique
- 200: base transversale de montage
- 202: partie latérale
- 204: rainure

## Revendications

1. Un dispositif pour former un emballage autoportant (120) à structure légère non fermée servant au conditionnement d'une cartouche (110) d'articles plats (100) individuels, chaque article plat (100) ayant une hauteur, une largeur et une épaisseur, laquelle épaisseur est de dimension inférieure à la largeur et à l'épaisseur, la cartouche (110) étant formée d'une multiplicité de ces articles plats (100) placés en juxtaposition directe et alignés, le long d'un axe longitudinal (112) rectiligne, dans le sens de l'épaisseur des articles plats (100), la cartouche (110) ayant une hauteur, une largeur et une longueur, la longueur de la cartouche (110) étant dans le sens de l'axe longitudinal (112), le dispositif incluant :
une paire de supports latéraux (130) individuels et rigides, lesquels sont configurés pour être mutuellement opposés et placés en appui latéral direct sur des côtés latéraux respectifs de la cartouche (110), chaque support latéral (130) comprenant une paroi latérale principale (132) configurée pour être disposée parallèlement à l'axe longitudinal (112) dans l'emballage (120), la paroi latérale principale (132) incluant une face extérieure et une face intérieure, la face intérieure étant configurée pour être en appui direct sur une arête latérale (102, 104) correspondante de chacun des articles plats (100) dans la cartouche (110) afin de les immobiliser dans une cavité (136) formée entre les deux faces intérieures opposées des deux supports latéraux (130), la cavité (136) ayant une hauteur et une longueur qui sont au moins respectivement égales à la hauteur et à la longueur de la cartouche (110), chaque support latéral (130) ayant également une partie interne pour supporter verticalement chacun des articles plats (100) dans la cavité (136); et
des moyens configurés pour être intégrés à l'emballage autoportant (120) pour maintenir les supports latéraux (130) en position de conditionnement contre la cartouche (110),
dispositif dans lequel :
chaque support latéral (130) comprend trois rebords intérieurs (140, 142, 144) qui bordent la face intérieure de la paroi latérale principale (132), le premier rebord (140) s'étendant le long d'une arête inférieure de la paroi latérale principale (132), et les deuxième et troisième rebords (142, 144) s'étendant le long d'une arête verticale correspondante de la paroi latérale principale (132), la paroi latérale principale (132) incluant une arête supérieure dépourvue de rebord intérieur pour faciliter un chargement des articles plats (100) par le haut; ou
chaque support latéral (130) comprend quatre rebords intérieurs (140, 142, 144, 146) qui bordent la face intérieure de la paroi latérale principale (132), le premier rebord (140) s'étendant le long d'une arête inférieure de la paroi latérale principale (132), les deuxième et troisième rebords (142, 144) s'étendant le long d'une arête verticale correspondante de la paroi latérale principale (132), et le quatrième rebord (146) s'étendant le long d'une arête supérieure de la paroi latérale principale (132),
dispositif dans lequel :
le rebord (140) situé le long de l'arête inférieure de la paroi latérale principale (132) de chaque support latéral (130) constitue la partie interne qui est prévue pour supporter verticalement chacun des articles plats (100) et sur laquelle une portion d'une arête inférieure de chacun des articles plats (100) vient s'appuyer dans l'emballage (120),
dispositif dans lequel :
les rebords (142, 144) situés le long de chaque arête verticale de la paroi latérale principale (132) de chaque support latéral (130) comprennent chacun une encoche (148) à une extrémité, les deux encoches (148) étant mutuellement alignées pour permettre une imbrication des deux supports latéraux (130) de la paire du côté de leurs faces intérieures lorsqu'ils sont inutilisés, les deux supports latéraux (130) étant configurés pour s'imbriquer lorsqu'ils ne sont pas utilisés autour d'une cartouche.

2. Le dispositif selon la revendication 1, dans lequel :
la paroi latérale principale (132) de chaque support latéral (130) est de forme sensiblement rectangulaire et plane; et/ou
la paroi latérale principale (132) comprend au moins une ouverture (134) entre sa face intérieure et sa face extérieure; et/ou
les supports latéraux (130) de la paire sont de forme identique.

3. Le dispositif selon la revendication 1 ou 2, dans lequel :
les rebords (140, 142, 144, 146) de chaque support latéral (130) ont une largeur sensiblement identique.

4. Le dispositif selon l'une quelconque des revendications 1 à 3, dans lequel :
chaque rebord (140, 142, 144, 146) s'étend de façon ininterrompue; et/ou
chaque rebord (140, 142, 144, 146) fait partie intégrale d'une pièce monolithique qui comprend la paroi latérale principale (132) correspondante; et/ou
chaque rebord (140, 142, 144, 146) est disposé perpendiculairement à la paroi latérale principale (132) correspondante.

5. Le dispositif selon l'une quelconque des revendications 1 à 4, dans lequel :
les moyens configurés pour être intégrés à l'emballage autoportant (120) pour maintenir les supports latéraux (130) en position contre la cartouche (110) sont situés à l'extérieur de la cavité (136) formée entre les deux faces intérieures opposées des supports latéraux (130).

6. Le dispositif selon l'une quelconque des revendications 1 à 5, dans lequel les moyens configurés pour être intégrés à l'emballage autoportant (120) pour maintenir les supports latéraux (130) en position contre la cartouche (110) comprennent une pellicule (150) entourant les supports latéraux (130).

7. Le dispositif selon la revendication 6, dans lequel :
la pellicule (150) est une pellicule en plastique étirable formée par une multitude d'enroulements, ou une pellicule en plastique rétrécissable sous l'effet de la chaleur; et/ou
la pellicule (150) forme une barrière hermétique autour de la cartouche (110).

8. Le dispositif selon l'une quelconque des revendications 1 à 7, dans lequel les moyens intégrés à l'emballage autoportant (120) pour maintenir les supports latéraux (130) en position contre la cartouche (110) comprennent au moins une bande de serrage (152) qui s'appuie sur l'extérieur des supports latéraux (130).

9. Le dispositif selon la revendication 8, dans lequel :
deux bandes de serrage (152) sont utilisées, les deux bandes (152) étant espacées l'une de l'autre; et/ou
chaque support latéral (130) comprend des rainures externes arrondies (154) situées sur l'extérieur des supports latéraux (130) et contre lesquelles viendront s'appuyer la ou les bandes de serrage (152) pour faciliter le cerclage et le maintien en place après le cerclage.

10. Le dispositif selon l'une quelconque des revendications 1 à 9, dans lequel :
les supports latéraux (130) sont faits d'un matériau sélectionné parmi le groupe constitué par une matière plastique, de l'aluminium et de la fibre de carbone; et/ou
la paroi latérale principale (132) de chaque support latéral (130) comprend une partie centrale élargie plane (180) permettant de manipuler le support latéral (130) par ventouse; et/ou
la paroi latérale principale (132) de chaque support latéral (130) comprend une partie centrale (190) avec un aimant ou faite en matériau ferromagnétique permettant de manipuler le support latéral (130) par force magnétique; et/ou
les supports latéraux (130) comprennent un système de connexion pour les attacher, de façon amovible, à une base transversale de montage (200) horizontale avant d'ajouter les moyens intégrés à l'emballage autoportant (120) pour maintenir les supports latéraux (130) en position de conditionnement contre la cartouche (110) pour le chargement des articles plats (100).

11. Emballage conditionné autoportant (120) comprenant un dispositif selon l'une quelconque des revendications 1 à 10 et une cartouche (110) d'articles plats individuels, chaque article plat (100) ayant une hauteur, une largeur et une épaisseur, laquelle épaisseur est de dimension inférieure à la largeur et à l'épaisseur, la cartouche étant formée d'une multiplicité de ces articles plats (100) placés en juxtaposition directe et alignés, le long d'un axe longitudinal (112) rectiligne, dans le sens de l'épaisseur des articles plats (100), la cartouche (110) ayant une hauteur, une largeur et une longueur, la longueur de la cartouche (110) étant dans le sens de l'axe longitudinal (112), les supports latéraux (130) étant mutuellement opposés et placés en appui latéral direct sur des côtés latéraux respectifs de la cartouche (110), la paroi latérale principale (132) de chaque support latéral (130) étant disposée parallèlement à l'axe longitudinal (112) dans l'emballage, la face intérieure de la paroi latérale principale (132) étant en appui direct sur une arête latérale (102, 104) correspondante de chacun des articles plats (100) dans la cartouche (110) afin de les immobiliser dans une cavité (136) formée entre les faces intérieures opposées des deux supports latéraux (130), la cavité (136) ayant une hauteur et une longueur qui sont au moins respectivement égales à la hauteur et à la longueur de la cartouche (110), le rebord (140) qui s'étend le long de l'arête inférieure de la paroi latérale principale (132) constitue la partie interne qui supporte verticalement chacun des articles plats (100) et sur laquelle une portion d'une arête inférieure de chacun des articles plats (100) s'appuie dans l'emballage (120).

12. Emballage conditionné autoportant (120), selon la revendication 11, dans lequel les articles plats (100) dans la cartouche (110) sont identiques et sont disposés dans une même orientation ou en mode alterné par paquet.

13. Emballage conditionné autoportant (120), selon l'une quelconque des revendications 11 à 12, dans lequel les articles plats (100) ont une mémoire de forme, les articles plats (100) étant préférablement partiellement comprimés dans le sens de leur épaisseur à l'intérieur de la cartouche (110) de l'emballage autoportant (120) et la compression étant limitée afin de ne pas affecter ou altérer les articles plats (100).

14. Emballage conditionné autoportant (120), selon l'une quelconque des revendications 11 à 13, dans lequel les articles plats (100) sont des boîtes pliantes comportant des panneaux collés; et/ou les articles plats (100) sont de forme sensiblement parallélépipédique.

## Patentansprüche

1. Vorrichtung zum Bilden einer selbsttragenden Verpackung (120) mit leichtem, nicht geschlossenem Aufbau, zum Verpacken eines Einsatzes (110) einzelner flacher Gegenstände (100), wobei jeder flache Gegenstand (100) eine Höhe, eine Breite und eine Dicke besitzt, welche Dicke kleiner als die Breite und die Dicke ist, wobei der Einsatz (110) aus einer Vielzahl dieser flachen Gegenstände (100) gebildet ist, die direkt nebeneinander angeordnet und entlang einer geradlinigen Längsachse (112) in Richtung der Dicke der flachen Gegenstände (100) ausgerichtet sind, wobei der Einsatz (110) eine Höhe, eine Breite und eine Länge besitzt, wobei die Länge des Einsatzes (110) in Richtung der Längsachse (112) liegt, wobei die Vorrichtung aufweist:
ein Paar einzelne und starre seitliche Stützen (130), die dazu ausgebildet sind, einander gegenüberliegend und in direkter seitlicher Abstützung an jeweiligen Lateralseiten des Einsatzes (110) platziert zu werden, wobei jede seitliche Stütze (130) eine Hauptseitenwand (132) aufweist, die dazu ausgebildet ist, parallel zur Längsachse (112) in der Verpackung (120) angeordnet zu werden, wobei die Hauptseitenwand (132) eine Außenseite und eine Innenseite aufweist, wobei die Innenseite dazu ausgebildet ist, direkt an einer entsprechenden Seitenkante (102, 104) jedes der flachen Gegenstände (100) in dem Einsatz (110) anzuliegen, um diese in einer Kavität (136) zu immobilisieren, die zwischen den beiden gegenüberliegenden Innenseiten der beiden seitlichen Stützen (130) ausgebildet ist, wobei die Kavität (136) eine Höhe und eine Länge besitzt, die jeweils mindestens gleich der Höhe und der Länge des Einsatzes (110) sind, wobei jede seitliche Stütze (130) auch einen inneren Abschnitt zum vertikalen Abstützen jedes der flachen Gegenstände (100) in der Kavität (136) aufweist; und
Mittel, die dazu ausgebildet sind, an der selbsttragenden Verpackung (120) integriert zu werden, um die seitlichen Stützen (130) in der Verpackungsposition gegen den Einsatz (110) zu halten,
wobei bei der Vorrichtung:
jede seitliche Stütze (130) drei Innenflansche (140, 142, 144) aufweist, welche die Innenseite der Hauptseitenwand (132) begrenzen, wobei der erste Flansch (140) sich entlang einer Unterkante der Hauptseitenwand (132) erstreckt und die zweiten und dritten Flansche (142, 144) sich entlang einer entsprechenden Vertikalkante der Hauptseitenwand (132) erstrecken, und die Hauptseitenwand (132) eine Oberkante frei von einem Innenflansch zum einfachen Beladen von flachen Gegenständen (100) von oben aufweist; oder
jede seitliche Stütze (130) vier Innenflansche (140, 142, 144, 146) aufweist, welche die Innenseite der Hauptseitenwand (132) begrenzen, wobei der erste Flansch (140) sich entlang einer Unterkante der Hauptseitenwand (132) erstreckt, die zweiten und dritten Flansche (142, 144) sich entlang einer entsprechenden Vertikalkante der Hauptseitenwand (132) erstrecken, und der vierte Flansch (146) sich entlang einer Oberkante der Hauptseitenwand (132) erstreckt,
wobei bei der Vorrichtung:
der entlang der Unterkante der Hauptseitenwand (132) befindliche Flansch (140) jeder seitlichen Stütze (130) den inneren Abschnitt ausbildet, der dazu vorgesehen ist, jeden der flachen Gegenstände (100) vertikal zu stützen, und auf dem in der Verpackung (120) ein Abschnitt einer Unterkante jedes der flachen Gegenstände (100) zur Anlage kommt,
wobei bei der Vorrichtung:
die entlang jeder Vertikalkante der Hauptseitenwand (132) befindlichen Flansche (142, 144) jeder seitlichen Stütze (130) jeweils eine Kerbe (148) an einem Ende aufweisen, wobei die beiden Kerben (148) zueinander ausgerichtet sind, um zu ermöglichen, dass sich die beiden seitlichen Stützen (130) des Paares bei Nichtverwendung auf der Seite ihrer Innenseiten verschachteln lassen, wobei die beiden seitlichen Stützen (130) dazu ausgebildet sind, ineinander zu greifen, wenn sie nicht um einen Einsatz herum verwendet werden.

2. Vorrichtung nach Anspruch 1, wobei:
die Hauptseitenwand (132) jeder seitlichen Stütze (130) eine im wesentlichen rechteckige und flache Form besitzt; und/oder
die Hauptseitenwand (132) mindestens eine Öffnung (134) zwischen ihrer Innenseite und ihrer Außenseite aufweist; und/oder
die seitlichen Stützen (130) des Paares von identischer Form sind.

3. Vorrichtung nach Anspruch 1 oder 2, wobei:
die Flansche (140, 142, 144, 146) jeder seitlichen Stütze (130) eine im wesentlichen identische Breite besitzen.

4. Vorrichtung nach einem der Ansprüche 1 bis 3, wobei:
jeder Flansch (140, 142, 144, 146) sich ununterbrochen erstreckt; und/oder
jeder Flansch (140, 142, 144, 146) ein integraler Bestandteil eines monolithischen Teils ist, das die entsprechende Hauptseitenwand (132) aufweist; und/oder jeder Flansch (140, 142, 144, 146) senkrecht zur entsprechenden Hauptseitenwand (132) angeordnet ist.

5. Vorrichtung nach einem der Ansprüche 1 bis 4, wobei:
die Mittel, die dazu ausgebildet sind, an der selbsttragenden Verpackung (120) integriert zu sein, um die seitlichen Stützen (130) in Position gegen den Einsatz (110) zu halten, sich außerhalb der Kavität (136) befinden, die zwischen den beiden gegenüberliegenden Innenseiten der seitliche Stützen (130) ausgebildet ist.

6. Vorrichtung nach einem der Ansprüche 1 bis 5, wobei die Mittel, die dazu ausgebildet sind, an der selbsttragenden Verpackung (120) integriert zu sein, um die seitlichen Stützen (130) in Position gegen den Einsatz (110) zu halten, eine Folie (150) umfassen, welche die seitlichen Stützen (130) umgibt.

7. Vorrichtung nach Anspruch 6, wobei:
die Folie (150) eine dehnbare Kunststofffolie ist, die durch mehrere Wicklungen gebildet wird, oder eine wärmeschrumpfbare Kunststofffolie ist; und/oder die Folie (150) eine hermetische Barriere um den Einsatz (110) bildet.

8. Vorrichtung nach einem der Ansprüche 1 bis 7, wobei die an der selbsttragenden Verpackung (120) integrierten Mittel zum Halten der seitlichen Stützen (130) in Position gegen den Einsatz (110) mindestens ein Spannband (152) umfassen, das sich an der Außenseite der seitlichen Stützen (130) abstützt.

9. Vorrichtung nach Anspruch 8, wobei:
zwei Spannbänder (152) verwendet sind, wobei die beiden Bänder (152) voneinander beabstandet sind; und/oder
jede seitliche Stütze (130) abgerundete äußere Rillen (154) aufweist, welche sich an der Außenseite der seitliche Stützen (130) befinden, und gegen welche sich das eine oder die mehreren Spannbänder (152) abstützen, um das Umreifen und Halten nach dem Umreifen zu erleichtern.

10. Vorrichtung nach einem der Ansprüche 1 bis 9, wobei:
die seitlichen Stützen (130) aus einem Material hergestellt sind, das aus der Gruppe bestehend aus einem Kunststoffmaterial, Aluminiummaterial und Kohlefasermaterial ausgewählt ist; und/oder
die Hauptseitenwand (132) jeder seitlichen Stütze (130) einen ebenen verbreiterten mittleren Abschnitt (180) aufweist, der ein Handhaben der seitlichen Stütze (130) mittels eines Saugnapfes gestattet; und/oder
die Hauptseitenwand (132) jeder seitlichen Stütze (130) einen mittleren Abschnitt (190) mit einem Magneten oder gebildet aus ferromagnetischem Material aufweist, der ein Handhaben der seitlichen Stütze (130) mittels Magnetkraft gestattet;
und/oder
die seitlichen Stützen (130) ein Verbindungssystem aufweisen zum lösbaren Befestigen derselben an einer horizontalen Quermontagebasis (200) bevor die an der selbsttragenden Verpackung (120) integrierten Mittel hinzugefügt werden, um die seitlichen Stützen (130) für ein Beladen von flachen Gegenständen (100) in Verpackungsposition gegen den Einsatz (110) zu halten.

11. Hergerichtete selbsttragende Verpackung (120), aufweisend eine Vorrichtung nach einem der Ansprüche 1 bis 10 und einen Einsatz (110) aus einzelnen flachen Gegenständen, wobei jeder flache Gegenstand (100) eine Höhe, eine Breite und eine Dicke besitzt, welche Dicke kleiner als die Breite und die Dicke ist, wobei der Einsatz aus einer Vielzahl dieser flachen Gegenstände (100) gebildet ist, die direkt nebeneinander angeordnet und entlang einer geradlinigen Längsachse (112) in Richtung der Dicke der flachen Gegenstände (100) ausgerichtet sind, wobei der Einsatz (110) eine Höhe, eine Breite und eine Länge besitzt, wobei die Länge des Einsatzes (110) in Richtung der Längsachse (112) liegt, wobei die seitlichen Stützen (130) einander gegenüberliegen und in direkter seitlicher Abstützung an jeweiligen Lateralseiten des Einsatzes (110) platziert sind, wobei die Hauptseitenwand (132) jeder seitlichen Stütze (130) parallel zur Längsachse (112) in der Verpackung angeordnet ist, wobei die Innenseite der Hauptseitenwand (132) direkt an einer entsprechenden Seitenkante (102, 104) jedes der flachen Gegenstände (100) in dem Einsatz (110) anliegt, um diese in einer Kavität (136) zu immobilisieren, die zwischen den gegenüberliegenden Innenseiten der beiden seitlichen Stützen (130) ausgebildet ist, wobei die Kavität (136) eine Höhe und eine Länge besitzt, die jeweils mindestens gleich der Höhe und der Länge des Einsatzes (110) sind, wobei der Flansch (140), welcher sich entlang der Unterkante der Hauptseitenwand (132) erstreckt, den inneren Abschnitt bildet, der jeden der flachen Gegenstände (100) vertikal abstützt, und auf dem ein Abschnitt einer Unterkante jedes der flachen Gegenstände (100) in der Verpackung (120) sich aufstützt.

12. Hergerichtete selbsttragende Verpackung (120) nach Anspruch 11, wobei die flachen Gegenstände (100) in dem Einsatz (110) identisch sind und in der gleichen Ausrichtung oder im Wechselpackungsmodus angeordnet sind.

13. Hergerichtete selbsttragende Verpackung (120) nach einem der Ansprüche 11 bis 12, wobei die flachen Gegenstände (100) ein Formgedächtnis aufweisen, wobei die flachen Gegenstände (100) vorzugsweise teilweise in der Richtung ihrer Dicke im Inneren des Einsatzes (110) der selbsttragenden Verpackung (120) komprimiert sind und die Kompression begrenzt ist, um die flachen Gegenstände (100) nicht zu beeinträchtigen oder zu verändern.

14. Hergerichtete selbsttragende Verpackung (120) nach einem der Ansprüche 11 bis 13, wobei die flachen Gegenstände (100) Faltschachteln mit geklebten Platten sind; und/oder die flachen Gegenstände (100) eine im wesentlichen quaderförmige Form besitzen.

## Claims

1. A device for forming a free-standing package (120) with an open, light structure for packaging a bundle (110) of individual flat articles (100), each flat article (100) having a height, a width, and a thickness, which thickness is a smaller dimension than the width and thickness, the bundle (110) being formed from several of these flat articles (100) placed in direct juxtaposition and aligned, along a straight longitudinal axis (112), in the direction of the thickness of the flat articles (100), the bundle (110) having a height, a width and a length, with the length of the bundle (110) being in the direction of the longitudinal axis (112), the device including:
a pair of individual rigid lateral supports (130), which are configured to be mutually opposite each other and to rest directly on the respective lateral sides of the bundle (110), each lateral support (130) comprising a main side wall (132) configured to be positioned parallel to the longitudinal axis (112) in the package (120), the main side wall (132) comprising an outer face and an inner face, the inner face being configured to rest directly on a corresponding lateral ridge (102, 104) of each of the flat articles (100) in the bundle (110) in order to immobilize them in a cavity (136) formed between the two opposite inner faces of the two lateral supports (130), the cavity (136) having a height and a length that are at least equal to the height and length of the bundle (110), each lateral support (130) also having an inner part which vertically supports each of the flat articles (100) in the cavity (136); and
means configured to be incorporated in the free-standing package (120) for holding the lateral supports (130) in the packaging position against the bundle (110),
wherein, in the device:
each lateral support (130) comprises three inner rims (140, 142, 144) which border the inner face of the main side wall (132), the first rim (140) extending along a bottom ridge of the main side wall (132), and the second and third rims (142, 144) extending along a corresponding vertical ridge on the main side wall (132), the main side wall (132) including a top ridge with no inner rim to facilitate loading of the flat articles (100) from the top; or
each lateral support (130) comprises four inner rims (140, 142, 144, 146) which border the inner face of the main side wall (132), the first rim (140) extending along a bottom ridge on the main side wall (132), the second and third rims (142, 144) extending along a corresponding vertical ridge of the main side wall (132), and the fourth rim (146) extending along a top ridge of the main side wall (132);
wherein, in the device:
the rim (140) located along the bottom ridge of the main side wall (132) of each lateral support (130) constitutes the inner part provided to vertically support each of the flat articles (100) and on which a portion of a bottom ridge of each of the flat articles (100) rests in the package (120);
wherein, in the device:
the rims (142, 144) located along each vertical ridge of the main side wall (132) of each lateral support (130) each comprise a notch (148) at one end, the two notches (148) being lined up with each other for nesting the two lateral supports (130) of the pair on the side of their inner faces when not in use, the two lateral supports (130) being configured for nesting when they are not set around a bundle.

2. The device according to claim 1, wherein:
the main side wall (132) of each lateral support (130) is substantially rectangular and flat in shape; and/or
the main side wall (132) comprises at least one opening (134) between its inner face and outer face; and/or
the lateral supports (130) of the pair are identical in shape.

3. The device according to claim 1 or 2, wherein:
the rims (140, 142, 144, 146) of each lateral support (130) substantially have a same width.

4. The device according to any one of claims 1 to 3, wherein:
each rim (140, 142, 144, 146) extends uninterruptedly; and/or
each rim (140, 142, 144, 146) forms an integral part of a monolithic piece which comprises the corresponding main side wall (132); and/or
each rim (140, 142, 144, 146) is positioned perpendicularly to the corresponding main side wall (132).

5. The device according to any one of claims 1 to 4, wherein:
the means configured to be incorporated in the free-standing package (120) for holding the lateral supports (130) in position against the bundle (110) are located outside the cavity (136) formed between the two opposite inner faces of the lateral supports (130).

6. The device according to any one of claims 1 to 5, wherein the means configured to be incorporated in the free-standing package (120) for holding the lateral supports (130) in position against the bundle (110) comprise a film (150) surrounding the lateral supports (130).

7. The device according to claim 6, wherein:
the film (150) is a stretch plastic film wrapped round in several layers, or a heat-shrink plastic film; and/or
the film (150) forms a hermetic barrier around the bundle (110).

8. The device according to any one of claims 1 to 7, wherein the means incorporated in the free-standing package (120) for holding the lateral supports (130) in position against the bundle (110) comprise at least one tensioned strap (152) which rests on the outside of the lateral supports (130).

9. The device according to claim 8, wherein:
two tensioned straps (152) are used, the two straps (152) being spaced apart; and/or
each lateral support (130) comprises rounded outer grooves (154) located on the outside of the lateral supports (130) and against which the tensioned strap or straps (152) will rest to facilitate strapping and holding in place after strapping.

10. The device according to any one of claims 1 to 9, wherein:
the lateral supports (130) are made of a material selected from the group consisting of plastic, aluminum, and carbon fiber; and/or
the main side wall (132) of each lateral support (130) comprises a flat wide central part (180) for handling the lateral support (130) using a suction pad; and/or
the main side wall (132) of each lateral support (130) comprises a central part (190) with a magnet or made of a ferromagnetic material enabling the lateral support (130) to be handled by magnetic force; and/or
the lateral supports (130) comprise a connection system for securing them, in a removable manner, to a horizontal transversal assembly base (200) before adding the means incorporated in the free-standing package (120) to hold the lateral supports (130) in the packaging position against the bundle (110) for the loading of the flat articles (100).

11. A free-standing package (120) comprising a device according to any one of claims 1 to 10 and a bundle (110) of individual flat articles, each flat article (100) having a height, a width and a thickness, which thickness is a smaller dimension than the width and thickness, the bundle being formed from several of these flat articles (100) placed in direct juxtaposition and aligned, along a straight longitudinal axis (112), in the direction of the thickness of the flat articles (100), the bundle (110) having a height, a width, and a length, with the length of the bundle (110) being in the direction of the longitudinal axis (112), the lateral supports (130) being mutually opposite each other and resting directly on the respective lateral sides of the bundle (110), the main side wall (132) of each lateral support (130) being positioned parallel to the longitudinal axis (112) in the package, the inner face of the main side wall (132) resting directly on a corresponding lateral ridge (102, 104) of each of the flat articles (100) in the bundle (110) in order to immobilize them in a cavity (136) formed between the two opposite inner faces of the two lateral supports (130), the cavity (136) having a height and a length that are at least equal to the height and length of the bundle (110), the rim (140) extending along a bottom ridge of the main side wall (132) constituting the inner part vertically supporting each of the flat articles (100) and on which a portion of a bottom ridge of each of the flat articles (100) rests in the package (120).

12. A free-standing package (120) according to claim 11, wherein the flat articles (100) in the bundle (110) are identical and are positioned in the same orientation or in an alternate packing mode.

13. A free-standing package (120) according to any one of claims 11 to 12, wherein the flat articles (100) have a shape memory, the flat articles (100) being preferably partially compressed in the direction of their thickness inside the bundle (110) of the free-standing package (120) and the compression being limited so as not to affect or damage the flat articles (100).

14. A free-standing package (120) according to any one of claims 11 to 13, wherein the flat articles (100) are folding cartons comprising glued panels; and/or the flat articles (100) are substantially parallelepiped in shape.
